# EUROPEAN PATENT APPLICATION

(11) **EP 4 803 644 A1**
(43) Date of publication of application: **09.09.2026**
(21) Application number: 24884823.6
(22) Date of filing: 30.10.2024
(51) Int. Cl.: C22C 38/04, C22C 38/02, C22C 38/12, C22C 38/14

(54) **CORROSION-RESISTANT ROLLED CLAD STEEL PLATE AND MANUFACTURING METHOD THEREFOR**

(30) Priority: 31.10.2023 CN 202311425041
(71) Applicant: BAOSHAN IRON & STEEL CO., LTD., Shanghai 201900 (CN)
(72) Inventor: LIU, Zili, Shanghai 201900 (CN); ZHANG, Hanqian, Shanghai 201900 (CN); LIU, Huibin, Shanghai 201900 (CN)
(74) Representative: Kuhnen & Wacker Patent- und Rechtsanwaltsbüro PartG mbB
(86) International application number: PCT/CN2024/128520
(87) International publication number: WO 2025/092823

(57) **Abstract**

A corrosion-resistant rolled composite steel plate and a manufacturing method therefor. The corrosion-resistant rolled composite steel plate comprises a base material, a cladding layer, and a transition layer between the base material and the cladding layer; in percentage by weight, the base material is prepared from the following components: C: 0.01-0.10%, Si: 0.2-0.7%, Mn: 0.30-1.70%, Ti: 0.006-0.012%, Als: 0.008-0.018%, Nb: 0.0090-0.050%, B: 0.0010-0.0050%, N: 0.0015-0.0050%, P ≤ 0.017%, S ≤ 0.020%, O ≤ 0.0050%, and the balance being Fe and other unavoidable impurities; and the cladding layer is stainless steel. By preventing or reducing the diffusion of carbon on a carbon steel side of the base material at an interface of the clad steel plate, the possibility of failure caused by intergranular corrosion of the stainless steel at the cladding layer side is reduced, the corrosion resistance and the safety of the rolled clad steel plate in high temperature operating environments are comprehensively improved, and the present invention is suitable for equipment at operating temperatures of approx. 300°C in energy fields such as electrical power and the chemical industry.

## Description

### Technical Field

The present invention relates to corrosion-resistant steel material and manufacturing method therefor, in particular to a corrosion-resistant rolled clad steel plate and a manufacturing method therefor, which is suitable for equipment operating at a temperature range from room temperature to 300°C in energy fields such as electrical power and the chemical industry.

### Background

Clad steel plates of low-alloy steel + various corrosion-resistant materials are widely used in industries such as crude oil processing and energy chemical engineering due to their high mechanical strength and good corrosion resistance. With the rapid development of the national economy, the demand for various energy-related raw materials such as petroleum and chemical fertilizers is increasing. To improve energy production efficiency, the large-scale, high-parameter (higher temperature and higher pressure) and lightweight design of equipment for energy production and processing has become an inevitable trend. Such equipment upgrading demands impose higher performance requirements on the steel plates used for manufacturing the equipment, namely the steel plates are required to have not only higher strength and hardness, but also excellent toughness, processing and forming performance, and better corrosion resistance.

The traditional production process for clad steel plates is the explosion cladding process, whose main problems are as follows: the use of explosive for cladding generates a large amount of harmful gases, which has an adverse impact on the environment, meaning this production process fails to meet environmental protection requirements; meanwhile, the bonding rate at the interface of explosion-clad steel plates is relatively low and sometimes fails to meet the requirement of the bonding rate of 97% or more. When such steel plates are used to manufacture various high-temperature, high-pressure and large-scale vessel equipment, there will be great potential safety hazards. Once the bonding interface of the clad steel plate delaminates, the equipment malfunctions, which will cause huge losses to personal and property safety.

Compared with explosion-clad steel plates, the bonding rate of rolled clad steel plates is greatly increased to 99% or more, and the production process is more environmentally friendly than explosion cladding. Therefore, in recent years, the production scale and engineering application of rolled clad steel plates have been expanding year by year.

However, for both explosion-clad steel plates and rolled clad steel plates, a certain transition layer is formed at the bonding interface between carbon steel and other corrosion-resistant materials. Especially when the steel plates are in long-term service at high temperatures, carbon element in the carbon steel substrate material will diffuse to the stainless steel cladding layer through the transition layer. Once a large number of carbides are formed in the stainless steel cladding layer, intergranular corrosion will occur, which will adversely affect the corrosion resistance of the corrosion-resistant cladding material and eventually lead to the failure of the cladding material, creating potential safety hazards.

Therefore, how to rationally design the alloy composition and production process of the carbon steel base layer to minimize the negative impact on the corrosion resistance of the corrosion-resistant material caused by the diffusion of carbon element from the carbon steel material to the stainless steel cladding layer through the transition layer under long-term high-temperature service conditions has become an urgent requirement for improving the comprehensive performance and safety performance of rolled clad steel plates.

Existing technologies are as follows: Chinese Patent Application with Publication No. CN107310218A discloses a clad bulletproof steel plate and a manufacturing method therefor. The clad bulletproof steel plate comprises hard steel layers and soft steel layers arranged alternately at intervals, wherein the surface layer of the clad bulletproof steel plate is a hard steel layer, and atomic bonding is achieved between the hard steel layers and the soft steel layers through rolling cladding; wherein the soft steel layer comprises the following chemical elements by mass percentage: C: 0.001-0.01%, 0<Si≤0.005%, Mn: 0.05-0.15%, 0<Al≤0.005%, Ti: 0.01-0.10%, with the balance being Fe and other unavoidable impurities. The clad bulletproof steel plate has multiple soft steel layers and hard steel layers. The hard steel layers crack into small fragments when subjected to projectile impact to consume the impact energy, while the soft steel layers change the traveling direction of bullets and increase the forward resistance of bullets, thus achieving a better bulletproof effect. The core technical solution of this invention is to arrange the hard steel layers with high strength and the soft steel layers with good toughness at intervals to effectively consume the kinetic energy of bullets. However, the technical solution of the invention does not involve the relevant content of the transition interface between the hard steel layers and the soft steel layers, nor does it relate to the diffusion of carbon element from the carbon steel material to the cladding layer material.

Chinese Patent Application with Publication No. CN107310219A discloses "a bulletproof steel plate with good cold bending formability and a manufacturing method therefor". The bulletproof steel plate comprises three soft steel layers and two hard steel layers, wherein the three soft steel layers and two hard steel layers are arranged alternately at intervals, and the surface layer of the bulletproof steel plate is a soft steel layer. Atomic bonding is achieved between the hard steel layers and the soft steel layers through rolling cladding; wherein the soft steel layer comprises the following chemical elements by mass percentage: C: 0.001-0.01%, 0<Si≤0.005%, Mn: 0.05-0.15%, 0<Al≤0.005%, Ti: 0.01-0.10%, with the balance being Fe and other unavoidable impurities. The hard steel layers serve to change the forward direction of projectiles; the soft steel layers on the surface have good plasticity to ensure no cracking during tensile deformation and crack into small fragments when subjected to projectile impact to consume the impact energy; meanwhile, the soft steel layers at the core change the traveling direction of bullets and increase the forward resistance of bullets, thus achieving a better bulletproof effect. This patent application also adopts the technical solution of arranging hard steel and soft steel at intervals to reduce the kinetic energy of bullets, and the technical solution does not involve the bonding interface of rolled clad steel plates and the relevant content of element diffusion.

Chinese Patent Application with Publication No. CN108231273A discloses a method for improving the interface of copper-aluminum clad materials, which comprises the following steps: pre-coating or depositing graphene at the copper-aluminum interface, and then processing and cladding copper, aluminum and graphene together; the coating or depositing method is one of painting, electroplating and chemical vapor deposition; the processing and cladding method is one of rolling cladding, extrusion cladding and drawing cladding; the graphene is in the form of powder or film. By adding graphene to the copper-aluminum interface with the method of the invention, the interface bonding can be ensured, the formation of brittle intermetallic compounds with poor electrical conductivity at the interface is hindered, and the bonding and electrical conductivity of the interface are improved. This patent application relates to a method for improving the interface of clad materials, but since the substrate material and cladding material of the composite material are copper and aluminum respectively, it has little reference significance for the roll cladding technology of carbon steel and stainless steel. The patent application also does not mention the influence of element diffusion at the interface on material performance.

Based on the above patent applications, in the existing rolled clad steel plate technologies, little consideration is given to the transition layer at the bonding interface between the base layer and the cladding material, especially the impact of element from the substrate material through the transition layer on the performance of the stainless steel cladding layer. Basically, no targeted measures are taken to reduce the possibility of the deterioration of the corrosion resistance of stainless steel caused by carbide precipitation at the bonding interface of clad materials. Especially in the chemical engineering and energy industries, the working temperature of equipment manufactured with clad steel plates is often high (within 300°C) in many cases. If the equipment operates at high temperatures for decades, element diffusion may occur again at the material interface. In particular, when carbon element on the carbon steel side diffuse to the stainless steel cladding layer, more carbides will be formed, which will further reduce the corrosion resistance of stainless steel and create potential accident hazards.

### Summary

The object of the present invention is to provide a corrosion-resistant rolled clad steel plate and a manufacturing method therefor. By inhibiting or reducing the diffusion of carbon element on the carbon steel side at the interface of the clad steel plate, the possibility of failure of the stainless steel on the cladding layer side induced by intergranular corrosion is reduced, and the corrosion resistance and safety performance of the rolled clad steel plate under high-temperature working conditions are comprehensively improved. The steel plate is suitable for equipment operating at a temperature range from room temperature to 300°C in energy fields such as electrical power and the chemical industry.

To achieve the above object, the technical solution of the present invention is as follows:
A large number of fine, dispersively distributed MC precipitates (wherein M represents one or more of Nb and Ti) with stable high-temperature performance are formed in the substrate material of the clad steel plate according to the present invention. These stable carbide precipitated phases can fix the free carbon element in the steel within the carbon steel substrate material, thereby preventing the diffusion and migration of carbon element in the carbon steel to the interface of the rolled clad steel plate under high-temperature working conditions. This would otherwise lead to an increase in the concentration of carbon element in the stainless steel near the interface, resulting in the precipitation of a large number of carbide phases at the grain boundaries of the stainless steel, inducing intergranular corrosion and ultimately weakening or even losing the corrosion protection function of the cladding material.

Specifically, the corrosion-resistant rolled clad steel plate of the present invention is fabricated by roll cladding using carbon steel as the substrate material and stainless steel as the cladding layer. Therefore, the corrosion-resistant rolled clad steel plate of the present invention comprises a substrate layer, a cladding layer, and a transition layer between the substrate layer and the cladding layer; wherein the substrate layer has the following composition by weight percentage: C: 0.01%~0.10%, Si: 0.20%~0.70%, Mn: 0.30%~1.70%, Ti: 0.006%~0.012%, Als: 0.008%~0.018%, Nb: 0.0090%~0.050%, B: 0.0010%~0.0050%, N: 0.0015%~0.0050%, P ≤ 0.017%, S ≤ 0.020%, O ≤ 0.0050%, with the balance comprising Fe and other unavoidable impurities;
wherein the surface microstructure of the substrate layer is 60~80% of ferrite + 20~40% of pearlite + MC precipitates in terms of area percentage, and the central microstructure of the substrate layer is 30~40% of pearlite + 60~70% ferrite + MC precipitates in terms of area percentage; wherein M represents one or both of Nb and Ti, the average major axis length of the MC precipitates is less than 600 nm, and the bulk density of MC precipitates with a major axis length of less than 600 nm is greater than or equal to 2.0×10⁴ /mm³;
wherein the microstructure of the cladding layer contains MC precipitates, wherein M represents one or more of Cr, Mo, Nb and Ti, the average major axis length of the MC precipitates is less than 700 nm, and the bulk density of the MC precipitates is less than 1.0×10⁴ /mm³.

Further, in the composition of the substrate material of the clad steel plate, the balance is Fe and other unavoidable impurities.

Furthermore, the composition of the substrate material of the clad steel plate further contains at least one of the following chemical elements: 0<Ca ≤ 0.0055%, 0<Ni ≤ 0.65%, 0<Cu ≤ 0.55%.

Preferably, in the substrate layer of the clad steel plate, the number ratio of MC precipitates with a major axis length of less than 600 nm to the total MC precipitates is more than 50%. Preferably, in the substrate layer of the clad steel plate, the number ratio of MC precipitates with a major axis length of less than 600 nm to the total MC precipitates is ≥ 60%.

Preferably, the stainless steel referred to in this paper can be various types of stainless steel well known in the art, comprising but not limited to austenitic stainless steel, ferritic stainless steel, duplex stainless steel, super stainless steel and the like. The present invention can be implemented by using ready-made stainless steel products, or stainless steel can be prepared independently to serve as the cladding slab of the present invention.

In some embodiments, the stainless steel has the following composition by weight percentage: C: 0.01~0.05%; Si: 0.50~0.80%; Mn: 1.10~1.50%; Ni: 6.5~9.5%; Cr: 15.0~22.0%; N: 0.060~0.120%; P: ≤ 0.015%; S: ≤ 0.005%; O: ≤ 0.005%; with the balance being Fe and other unavoidable impurities.

Preferably, in the cladding layer of the clad steel plate, the number ratio of MC precipitates with a major axis length of less than 700 nm to the total MC precipitates is more than 50%. Preferably, in the cladding layer of the clad steel plate, the number ratio of MC precipitates with a major axis length of less than 700 nm to the total MC precipitates is ≥ 55%.

Additionally, a minimal amount of σ phase is present in the microstructure of the cladding layer of the clad steel plate, with the area ratio of the σ phase ≤ 1.5%; preferably, the area ratio of the σ phase adjacent to the transition layer is ≤ 0.5%.

Preferably, the thickness of the substrate layer of the clad steel plate is ≥ 6 mm, the thickness of the cladding layer is ≥ 2 mm, and preferably, the thickness of the transition layer is ≤ 230 µm. In some embodiments, the thickness of the substrate layer is 6~200 mm. In some embodiments, the thickness of the substrate layer is 10~200 mm or 10~100 mm. In some embodiments, the thickness of the cladding layer is 2~20 mm. In some embodiments, the thickness of the transition layer is 1~230 µm. In some embodiments, the thickness of the transition layer is 1~150 µm. In some embodiments, the thickness of the transition layer is 1~50 µm. In this paper, the thickness measurement of the base layer and the cladding layer is carried out in accordance with GB/T 6396-2008, and the thickness measurement of the transition layer is carried out in accordance with GB/T 6462-2005.

The substrate material of the clad steel plate according to the present invention has a yield strength of ≥255 MPa, a tensile strength of ≥390 MPa, a percentage reduction of area of ≥60%, an elongation of ≥20%, an impact absorption energy at -20°C of ≥200 J, and an impact absorption energy at -40°C of ≥120 J; the clad steel plate has a shear strength of ≥280 MPa.

In some embodiments, the substrate layer of the clad steel plate according to the present invention has a yield strength of ≥280 MPa. In some embodiments, the substrate layer of the clad steel plate according to the present invention has a yield strength of ≥300 MPa. In some embodiments, the substrate layer of the clad steel plate according to the present invention has a yield strength of 255~400 MPa, such as 280~400 MPa.

In some embodiments, the substrate layer of the clad steel plate according to the present invention has a tensile strength of ≥410 MPa. In some embodiments, the substrate layer of the clad steel plate according to the present invention has a tensile strength of ≥430 MPa. In some embodiments, the substrate layer of the clad steel plate according to the present invention has a tensile strength of 390~500 MPa, or 410~500 MPa.

In some embodiments, the substrate layer of the clad steel plate according to the present invention has a percentage reduction of area of ≥70%. In some embodiments, the substrate layer of the clad steel plate according to the present invention has a percentage reduction of area of 60~80% or 70~80%.

In some embodiments, the substrate layer of the clad steel plate according to the present invention has an elongation of ≥23%. In some embodiments, the substrate layer of the clad steel plate according to the present invention has an elongation of 20~27%, such as 23~27%.

In some embodiments, the substrate layer of the clad steel plate according to the present invention has an impact absorption energy at -20°C of ≥230 J. In some embodiments, the substrate layer of the clad steel plate according to the present invention has an impact absorption energy at -20°C of 200~260 J, such as 230~260 J.

In some embodiments, the substrate layer of the clad steel plate according to the present invention has an impact absorption energy at -40°C of 120~150 J.

In some embodiments, the shear strength at the clad interface of the substrate layer of the clad steel plate according to the present invention is ≥300 MPa. In some embodiments, the shear strength at the clad interface of the substrate layer of the clad steel plate according to the present invention is 280~360 MPa.

In the composition design of the substrate layer of the clad steel plate according to the present invention:
C: C is an important strengthening element. To ensure the carbon steel plate has appropriate strength, the mass percentage of C element in the steel needs to be controlled at ≥0.01%. Meanwhile, to improve the weldability of the carbon steel material in the substrate layer, the upper limit of C content in the carbon steel must be restricted. In addition, if the carbon content in the carbon steel substrate layer is relatively high, the difference in carbon concentration gradient between the two materials will lead to large-scale carbon migration at the interface between the substrate layer and the stainless steel cladding layer, causing intergranular corrosion of the stainless steel. Therefore, the upper limit of C content is set at 0.10%. Accordingly, the present invention controls the C content within the range of 0.01%~0.10%.

Si: Similar to carbon, Si is also a commonly used strengthening element in low-alloy steel. Adding a certain amount of Si to the steel can improve the strength performance of the steel; meanwhile, Si acts as a weak deoxidizer and can assist in deoxidation during the smelting process. Most of the SiO₂ products formed after deoxidation enter the steel slag and are removed, without affecting the steel's performance. In addition, adding an appropriate amount of Si to the steel can reduce the solubility of carbon in austenite, thereby promoting carbon precipitation, facilitating the formation of MC precipitates, fixing carbon element in the steel, and preventing large-scale carbon diffusion. Therefore, a certain amount of Si must be added to the steel. However, excessive Si will reduce the steel's weldability. Since Si has a stronger affinity for oxygen than iron, it tends to form low-melting-point silicates during welding, increasing the fluidity of slag and molten metal, causing spatter, and affecting the quality of welded joints. Thus, controlling the Si content within a certain range helps improve the steel's welding formability. Therefore, the present invention controls the Si content within 0.20%~0.70%.

Mn: Mn is also an important strengthening element that can effectively improve the strength of the substrate layer steel plate. Meanwhile, Mn is an effective austenite stabilizer, and adding a certain amount of Mn can increase the hardenability of the steel. Therefore, to ensure the steel's strength, the lower limit of Mn is set at 0.30%. However, Mn is prone to center segregation in the steel. Excessive addition of Mn will cause severe segregation at the center of the steel plate's thickness, reducing the low-temperature toughness of the steel plate's core. Thus, the upper limit of Mn content is limited to 1.70%. Based on this, the present invention controls the Mn content within 0.30%~1.70%.

Ti: Ti is not only a deoxidizing element but also a strong carbide-forming and nitride-forming element. In the present invention, adding an appropriate amount of Ti can, on the one hand, form stable MC precipitates in the steel, fixing carbon element in the substrate layer and preventing their diffusion to the clad material interface. Meanwhile, part of the Ti element participates in fixing free N element in the steel to form TiN precipitated phases, TiN precipitated phases can inhibit the growth of austenite grains and refine the grains, thereby simultaneously improving the strength and toughness of the steel plate. After Ti fixes part of the free nitrogen element, it helps ensure that the B element in the steel exists in a free state, improving the steel's hardenability. In addition, Ti can form Ti₂O₃ particles after deoxidation, thereby promoting the formation of intragranular ferrite and improving the steel's low-temperature impact toughness. However, when the Ti content in the steel is too high, the formed TiN and Ti₂O₃ particles grow in size, losing their ability to hinder austenite growth and form intragranular ferrite. Instead, they are likely to become sources of crack initiation, reducing the steel's low-temperature impact toughness. Therefore, the upper limit of Ti is set at 0.012%. Based on this, the present invention controls the Ti content within 0.006%~0.012%.

Als: Al is first and foremost an important deoxidizing element that forms aluminum oxide inclusions. Moreover, Al can combine with N element in the steel to form AlN precipitated phases, reducing the content of free N element in the steel, thereby avoiding the combination of B and N element in the steel, promoting an increase in the content of free B element in the steel, improving the steel's hardenability, and helping to enhance the steel plate's strength performance. However, when the content of acid-soluble aluminum in the steel is too high, the size of its deoxidation product, aluminum oxide, will increase. Due to the strong adsorption capacity between aluminum oxide inclusions, large-sized aluminum oxide clusters are formed. On the one hand, this can clog the nozzle during steelmaking, affecting the molten steel casting process; if these large-sized clustered inclusions enter the steel plate, they will result in unqualified inclusion rating and flaw detection of the steel plate. Therefore, the present invention controls the content of acid-soluble Als within 0.008%~0.018%.

Nb: Nb is a strong carbide-forming element. Nb can combine with carbon element in the steel to form MC precipitates, stabilizing carbon element in the steel and preventing carbon element diffusion to the interface. Meanwhile, adding an appropriate amount of Nb can increase the recrystallization temperature of the steel. After the steel undergoes recrystallization rolling in the austenite region, the austenite grains will not grow rapidly, and fine-grained steel has high strength and toughness. However, when the Nb content in the steel is too high, the formed MC precipitates will be relatively large, which will instead reduce the toughness of the steel plate and deteriorate the toughness of the heat-affected zone of welding. Therefore, the present invention controls the Nb content within 0.0090%~0.050%.

B: Adding an appropriate amount of B is to compensate for the decrease in the steel plate's strength performance caused by the reduction in the content of solute carbon element in the steel after fixing the carbon element in the steel with stable carbides. If B in the steel exists in a free state, part of the B will preferentially occupy grain boundary positions, improving the steel plate's hardenability. Therefore, the prerequisite for B to function is that it must exist in a free state in the steel. To prevent B in the steel from combining with oxygen and nitrogen to form boron oxide and boron nitride, the oxygen and nitrogen contents in the steel must be well controlled, which is also a key point in the alloy composition design. However, it should be noted that adding excessive B to the steel will cause a large amount of segregation of B at the grain boundaries, which is instead detrimental to the steel's toughness. Therefore, the present invention controls the B content within 0.0010%≤B≤0.0050%.

N: An appropriate amount of Ti and Al elements are added, and these two elements can combine with N element in the steel to form TiN and AlN precipitated phases. When these precipitated phases are fine and dispersively distributed, they can refine the austenite grains, thereby improving the strength and toughness of the steel plate. However, when the N content in the steel is too high, the excess N element will combine with B element in the steel to form BN, consuming free B element in the steel, reducing the effect of B element on improving the steel plate's strength. Meanwhile, excessive N element will have an adverse effect on the steel's toughness, especially when the solute N content exceeds 0.005%, which will significantly reduce the steel plate's low-temperature toughness. Therefore, the present invention controls the N content within 0.0015≤N≤0.0050%.

Preferably, the substrate layer of the clad steel plate according to the present invention further contains at least one of the following chemical elements: 0<Ca≤0.0055%, 0<Ni≤0.65%, 0<Cu≤0.55%.

Ca: Ca is a strong deoxidizing element. Adding an appropriate amount of Ca can control the oxygen content in the steel, thereby avoiding the oxidation of B element. However, when Ca in the steel exceeds 0.0055%, large inclusions of calcium oxide and calcium sulfide are likely to form in the steel, which is detrimental to the steel's toughness. Therefore, the present invention controls the Ca content within 0<Ca≤0.0055%.

Ni: Ni is a typical austenite-stabilizing element, which can significantly improve the hardenability of the steel plate and also enhance its low-temperature toughness. However, Ni is relatively expensive. Considering the production cost of the steel, excessive Ni should not be added to the steel. Therefore, the present invention controls the Ni content within 0<Ni≤0.65%.

Cu: An appropriate amount of Cu is added to help improve the strength of the steel and simultaneously enhance the corrosion resistance thereof. However, when the Cu content added to the steel is too high, the steel plate is prone to high-temperature brittleness at high temperatures. Therefore, the present invention controls the Cu content within 0<Cu≤0.55%.

It should be noted that the addition of the above Ca, Ni, and Cu elements will increase the production cost of the material. Considering both performance and cost control, at least one of the above elements can be preferably added in the technical solution of the present invention.

Among the unavoidable impurities in the substrate layer of the clad steel plate of the present invention: P≤0.017%, S≤0.020%, O≤0.0050%.

P, S, and O are all impurity elements in the steel. When technical conditions permit, the content of impurity elements in the steel should be reduced as much as possible to obtain steel with better performance and quality.

P: P is a harmful element for most steel plates. The main reason is that P is prone to segregate at grain boundaries, reducing the bonding force between atoms at the grain boundaries and causing temper brittleness of the steel plate. Especially when the steel plate operates at high temperatures, it will further exacerbate the temper brittleness caused by P. Therefore, the present invention controls the P content at P≤0.017%.

S: S in the steel is prone to combine with Mn in the steel to form MnS inclusions. The higher the S content, the larger the size of the formed MnS, which is detrimental to the strength and toughness of the steel plate. Meanwhile, excessive S content will lead to center segregation of the slab and is likely to cause hot cracks. Therefore, the present invention controls the S content at S≤0.020%.

O: O in the steel basically exists in the form of oxides. When the oxygen content in the steel is too high, it indicates an excessive amount of oxides in the steel, which may lead to the presence of large inclusions, affecting the strength and toughness of the steel plate. Therefore, the present invention controls the O content at O≤0.0050%.

The surface microstructure of the substrate layer of the clad steel plate according to the present invention is 60~80% of ferrite + 20~40% of pearlite, and the central microstructure of the substrate layer is 30~40% of pearlite + 60~70% of ferrite. Since the maximum operating temperature of the clad steel plate involved in the present invention is 300°C, controlling the microstructure type of the substrate layer of the clad steel plate to be ferrite + pearlite can meet the strength and toughness requirements for its operating conditions. The purpose of controlling the pearlite content in the surface microstructure of the substrate layer to be 20~40%, which is slightly lower than the 30~40% proportion in the central microstructure, is to reduce the pearlite content in the surface microstructure on the basis of ensuring the basic mechanical properties of the material, thereby lowering the carbon element concentration on the surface. This reduces the carbon concentration difference between the materials on both sides of the transition layer and weakens the concentration barrier for the migration of carbon element from the surface of the substrate layer to the transition layer.

The substrate layer of the rolled clad steel plate in the present invention contains stable MC precipitates, wherein M represents one or both of Nb and Ti, and the average major axis length of the MC precipitates is less than 600 nm. When the major axis length of the precipitated phases is large, it is easy to form crack initiation sources for microcracks inside the steel plate, thereby adversely affecting the mechanical properties of the steel plate. Therefore, it is necessary to control the average major axis length of MC in the substrate layer to be less than 600 nm. In the substrate layer of the rolled clad steel plate of the present invention, carbide precipitated phases with as small a size as possible are formed to ensure that while the carbon-fixing effect of carbides is fully exerted, the mechanical properties of the steel plate will not be adversely affected by the precipitation of carbides. Therefore, it is limited that the number ratio of MC precipitates with a major axis length of less than 600 nm to the total MC precipitates is more than 50%.

The Bulk density of MC precipitates with a major axis length of less than 600 nm in the substrate layer of the present invention is greater than 2.0×10⁴ /mm³. In the substrate layer steel plate of the present invention, to prevent free carbon element from diffusing to the cladding material, the composition and process are controlled to form MC precipitates in the steel for fixing free carbon element. Therefore, in the present invention, it is necessary to ensure that the bulk density of MC precipitates with a major axis length of less than 600 nm is greater than 2.0×10⁴ /mm³ to effectively control the carbon element in the steel and avoid massive diffusion of free carbon element to the stainless steel side.

The cladding material of the clad steel plate according to the present invention contains stable MC precipitates, wherein M represents one or more of Cr, Mo, Nb, and Ti, and the average major axis length of the MC precipitates is less than 700 nm. The larger the size of carbides in the cladding material, the greater the impact on the corrosion resistance of stainless steel. Therefore, it is desirable that the size of carbide precipitated phases in the cladding material is as small as possible. However, some carbide precipitated phases are inevitably generated during the production of the cladding material and the rolled clad steel plate. To ensure the corrosion resistance of the rolled clad steel plate, the present invention requires that the average major axis length of MC precipitates in the cladding material is less than 700 nm.

The bulk density of MC precipitates in the cladding material of the present invention is less than 1.0×10⁴ /mm³. In terms of controlling the quantity of carbide precipitated phases in the cladding material, it is desirable that the number of carbides is as small as possible, that is, the bulk density is controlled to be as low as possible. However, some carbides are inevitably formed during the heat treatment of the clad steel plate. Controlling the bulk density of carbides to be less than 1.0×10⁴ /mm³ can ensure the good corrosion resistance of the cladding material.

In the cladding material of the present invention, the number ratio of MC precipitates with a major axis length of less than 700 nm to the total MC precipitates is greater than 50%. In the present invention, the "bulk density" of MC precipitates is measured in accordance with the method recorded in the standard YB/T 5320-2006. To minimize the carbide precipitated phases in the cladding material and thereby enhance the cladding material corrosion resistance, the present invention limits the size and quantity of MC precipitates, i.e., the number ratio of MC precipitates with a major axis length of less than 700 nm to the total MC precipitates is greater than 50%. When the quantity and size of carbide precipitated phases exceed the limited range, the corrosion resistance of the cladding material will be significantly reduced, affecting the safe service performance of the rolled clad steel plate.

The cladding layer of the present invention is stainless steel (comprising austenitic stainless steel, ferritic stainless steel, duplex stainless steel, super stainless steel, etc.). The σ phase in its microstructure is an intermetallic phase with high hardness and low plasticity. When it exists in stainless steel, especially when precipitated along grain boundaries, it will have a significant impact on the plasticity of the steel, leading to a substantial decrease in the impact toughness of the steel. Therefore, the proportion of σ phase in the stainless steel is ≤1.5%, and particularly, the proportion of σ phase near the bonding interface (transition layer) is ≤0.5%.

The present invention also provides a manufacturing method for the aforementioned corrosion-resistant rolled clad steel plate, which comprises the following steps:
1) smelting and casting to prepare substrate material and cladding slabs
   a substrate material slab is smelted and cast according to the above-mentioned compositions; during the smelting process, deoxidizers Mn+Si, Al, and Ti alloy are sequentially added into the molten steel for deoxidation, wherein Mn+Si and Al are first added for pre-deoxidation, the oxygen potential of the molten steel after pre-deoxidation is controlled at 0.0020%~0.0075%, and Ti is then added for final deoxidation; upon completion of deoxidation, element B is added, and a carbon steel substrate material slab is obtained after casting; meanwhile, stainless steel is prepared or provided as a cladding slab;
2) Assembling slabs
   the substrate material slab and the cladding slab are subjected to surface treatment and then stacked together; the peripheries of the stacked slabs are welded and sealed, evacuated to vacuum, and sealed again to form a clad slab; preferably, the vacuum degree after evacuation is 8~60 Pa;
3) rolling the clad slab
   the clad slab is heated to 1020~1200°C, and then subjected to two-stage rolling; the total reduction ratio of the clad slab in the first-stage rolling is not less than 60% (e.g., 60~75%), the total reduction ratio in the second-stage rolling is not less than 20% (e.g., 20~30%), the reduction ratio of the final rolling is 10~18%, the total reduction ratio of the two-stage rolling is not less than 80% (e.g., 80~97%), and the finish rolling temperature is 850°C or more (e.g., 850~960°C);
4) heat treatment, the clad steel plate is subjected to quenching and tempering treatment.

Preferably, in step 2), the surfaces of the cast slabs for the substrate and the cladding layer are processed to ensure that the cast slab surfaces are free of obvious surface defects such as oil stains, slag inclusions, and cracks, while ensuring that the roughness of the processed surfaces of the cast slabs is not greater than 2.0Ra.

Preferably, in step 4), the quenching temperature is 920~955°C, the quenching holding time T1=(1~1.2)H, and after the holding is completed, the steel plate is taken out of the furnace and cooled to room temperature with water, wherein the unit of T1 is min, and H is the thickness of the substrate layer, with the unit being mm.

Preferably, in step 4), the tempering temperature is 550~700°C, the tempering holding time T2=(1~1.5)H, wherein the unit of T2 is min, and H is the thickness of the substrate layer, with the unit being mm.

In the manufacturing method of the present invention:
A large number of uniformly dispersed nanoscale MC precipitates need to be formed in the substrate layer of the clad steel plate. These MC precipitates are used to fix free carbon element in the carbon steel substrate layer, preventing massive diffusion of carbon elements to the interface between the substrate layer and the cladding material, which would cause carbide formation in the stainless steel and reduce its corrosion resistance. Thus, the service safety performance of the rolled clad steel plate for high-temperature equipment is improved. However, free carbon in the steel is a main strengthening element of the carbon steel substrate layer. When most free carbon element are fixed in the form of MC, the strength of the carbon steel will decrease. To compensate for the strength loss caused by carbon fixation, it is necessary to add B element to improve the hardenability of the steel plate. The hardenability effect of B element is mainly achieved through the distribution of free B at grain boundaries. Since B is an extremely active element, on the one hand, it can combine with oxygen in the molten steel to form boron oxide; on the other hand, B is also prone to combine with N to form boron nitride.

For this reason, in the technical solution of the present invention, the deoxidation sequence of the molten steel and the addition timing of B element are specially designed. That is, during deoxidation, Si+Mn is first used for pre-deoxidation, and most of the silicon oxide and manganese oxide will float up into the top slag. Using the strong deoxidizer Al for deoxidation can accurately control the oxygen potential (measured in accordance with the method for determining oxygen content in molten steel recorded in the ISO 14284:1996 standard) within the range of 0.0020% to 0.0075%. Then Ti is used for final deoxidation to form a large number of Ti oxides, and the added Ti can combine with free nitrogen element in the steel to form TiN. Specifically, the addition of Ti will further reduce the free oxygen concentration in the steel. Within a certain oxygen potential range (0.0020% to 0.0075%), the Ti₂O₃ inclusions formed after deoxidation have an appropriate size (2-5µm), which is conducive to the formation of partial acicular ferrite structure during solidification and subsequent phase transformation, improving the toughness of the steel plate. In addition, Ti can also combine with N in the steel to form partial TiN: on the one hand, it reduces the adverse effect of solute nitrogen on steel toughness; on the other hand, TiN can precipitate at high temperatures during solidification, playing a role in pinning the growth of austenite grains and refining the original austenite grains. After the oxygen and titanium contents in the steel are properly controlled, an appropriate amount of B element is added, thereby ensuring that the added B element mainly exists in a free state in the steel. This guarantees that the base steel plate has high hardenability, which can significantly improve the strength of the steel plate.

In step 2), the surfaces of the cast slabs for the substrate and the cladding layer are processed to ensure that the cast slab surfaces are free of obvious surface defects such as oil stains, slag inclusions, and cracks, while ensuring that the roughness of the processed surfaces of the cast slabs is not greater than 2.0Ra. After vacuuming, the vacuum degree is 8-60 Pa, which ensures the rolling effect of the clad slab.

In step 3), the clad slab is heated to 1020~1200°C for rolling for the following reasons: when the heating temperature is lower than 1020°C, the carbides and nitrides in the substrate material slab cannot be completely dissolved, which will reduce the pinning effect of carbides on austenite grains during rolling; meanwhile, within this temperature range, it is conducive to the homogenization of austenite in the cladding material, and the carbides in the cladding material are also completely dissolved. However, when the slab heating temperature is higher than 1200°C, it is easy to cause a sharp growth of austenite grains in the substrate layer and the cladding material, damaging the mechanical properties of the steel.

Correspondingly, it is preferred that the total reduction ratio of the slab in the first-stage rolling is not less than 60%, the total reduction ratio in the second-stage rolling is not less than 20%, the reduction ratio of the final rolling is 8~18%, the total accumulated reduction ratio of the two-stage rolling is not less than 80%, and the finish rolling temperature is 850°C or more.

Through the first-stage high-temperature and heavy-reduction rolling, the material can undergo full recrystallization during the rolling deformation process, continuously refining the austenite grains and inhibiting the formation of large-sized austenite grains in the steel, thereby improving the low-temperature toughness of the steel. If the total reduction ratio in the first stage is less than 60%, the austenite grain size in the steel will be relatively large, which is unfavorable to the strength and toughness indicators of the steel plate.

A total reduction ratio of not less than 20% in the second-stage rolling can further promote the refinement of austenite grains. A reduction ratio of 8~18% in the final rolling pass can increase the dislocation density in the steel and ensure the strength of the steel plate. If the reduction ratio is lower than 8%, the dislocation density is low, which is not conducive to strength improvement; if the reduction ratio is higher than 18%, the rolling torque will be excessively large, which is unfavorable to the rolling equipment. If the finish rolling temperature is lower than 850°C, the deformation resistance of the steel plate will increase, making it difficult to ensure a large final rolling reduction ratio.

In step 4), the quenching temperature is 920~955°C, the quenching holding time T1=(1~1.2)H, and after the holding is completed, the steel plate is taken out of the furnace and cooled to room temperature with water, wherein the unit of T1 is min, and H is the thickness of the substrate layer, with the unit being mm.

It should be noted that during the quenching process, if the quenching temperature is lower than 920°C, the austenitization homogenization of the steel requires a longer time, which will reduce the heat treatment efficiency; on the other hand, if the quenching temperature of the steel is higher than 955°C, some austenite in the carbon steel tends to grow, making it easy to form a mixed grain structure, which is unfavorable to the uniformity of the steel structure. Correspondingly, when the quenching holding time T1 of the steel is less than 1H, sufficient austenitization cannot be achieved; while when the quenching holding time T1 exceeds 1.2H, it will exceed the time required for the steel to complete austenitization, thereby reducing the efficiency of the quenching process.

In step 4), the tempering temperature is 550~700°C, the tempering holding time T2=(1~1.5)H, wherein the unit of T2 is min, and H is the thickness of the substrate layer, with the unit being mm.

During the tempering process in step 4), if the tempering temperature of the steel is lower than 550°C, a longer tempering time is required to remove the residual quenching stress in the steel, which will reduce the tempering efficiency, and the formation rate of MC precipitates in the carbon steel will be slow; whereas if the tempering temperature of the steel is higher than 700°C, the MC precipitates in the steel are prone to Ostwald ripening and aggregation growth, which is unfavorable to the formation of fine and dispersively distributed MC precipitates in the steel. Correspondingly, when the tempering holding time T2 is less than 1.0H, the quenching stress of the steel tends to not be completely removed; while when the tempering holding time T2 is higher than 1.5H, the MC precipitates in the steel are prone to coarsening, and the production efficiency of the tempering process will be reduced.

Compared with the prior art, the advantages and beneficial effects of the present invention are as follows:
1. The fine, dispersively distributed spherical (2-5µm) Ti₂O₃ oxides formed in the steel of the present invention can serve as nucleation cores for MC carbide precipitated phases. Combined with the optimized design of alloy composition and heat treatment process, a large number of dispersively distributed nanoscale MC precipitates (wherein M represents one or more of Nb and Ti) can be formed in the substrate layer. These phases can fix free carbon element in the substrate layer, reduce the diffusion and aggregation of carbon element to the clad interface, inhibit the precipitation of carbides at the grain boundaries of stainless steel, and ensure the corrosion resistance of the clad rolled steel plate. Particularly, when the rolled clad steel plate is used in high-temperature equipment, even under the high-temperature working condition of 300°C, the high-melting-point Ti₂O₃ oxides (melting point of 2130°C) formed by controlling the smelting process can still stably exist in the steel, acting as nucleation cores for MC carbides and continuing to function. That is, part of the free carbon element present in the steel can still react with alloy elements in the steel using Ti₂O₃ oxides as nucleation cores to form fine MC carbides, thereby further fixing carbon element, preventing carbon element in the carbon steel from diffusing to the interface, and protecting the corrosion resistance of the rolled clad steel plate under long-term high-temperature service conditions.
2. In the production process of existing low-alloy high-strength steel, aluminum element is often used as a deoxidizer to reduce the oxygen content in the steel as much as possible. The advantage of aluminum deoxidation is its high deoxidation efficiency, but its disadvantage is that after aluminum deoxidation, the Al₂O₃ inclusions formed in the molten steel are likely to have an adverse impact on the flaw detection and performance of the steel plate. This is mainly because individual Al₂O₃ inclusions are mostly irregular and sharp, which easily form crack initiation sources inside the material when the substrate layer is under stress; at the same time, Al₂O₃ inclusions are prone to aggregation and growth in the molten steel, forming large-sized Al₂O₃ inclusion clusters that block the pouring nozzle. Moreover, when large-sized inclusions exist in the steel, the tensile and impact properties of the steel plate are prone to fluctuations. In addition, Al₂O₃ inclusions cannot serve as nucleation cores for carbide precipitated phases.

In the present invention, by controlling the type of deoxidizer, deoxidation sequence, and addition amount of deoxidizer during the steel smelting process, the fine, dispersively distributed spherical (2-5µm) Ti₂O₃ oxides with high melting points are finally formed in the steel. Ti₂O₃ oxides are not easy to aggregate and grow in the molten steel, have no sharp edges themselves, and do not significantly damage the flaw detection and mechanical properties of the steel plate, it can optimize the microstructure type of the steel plate; by controlling the element content ratio, the precipitation of TiN is controlled to refine austenite grains; by designing the addition sequence of alloy elements in the steel, the oxidation and nitridation amounts of B element can be effectively reduced, thereby maximizing the utilization of the added B element, improving the hardenability of the steel plate to the greatest extent, refining grains, and ensuring that the steel plate has high strength and good low-temperature toughness.

In addition, through the control of smelting process, especially the type of deoxidizer, deoxidation sequence, and addition amount of deoxidizer, the fine, dispersively distributed spherical (2-5µm) Ti₂O₃ oxides formed in the steel can serve as nucleation cores for MC carbide precipitated phases. Combined with the optimized design of alloy composition and heat treatment process, a large number of dispersively distributed nanoscale MC precipitates (wherein M represents one or more of Nb and Ti) can be formed in the substrate layer. These phases can fix free carbon element in the substrate layer, reduce the diffusion and aggregation of carbon element to the clad interface, inhibit the precipitation of carbides at the grain boundaries of stainless steel, and ensure the corrosion resistance of the rolled clad steel plate. Particularly, when the rolled clad steel plate is used in high-temperature equipment, even under the high-temperature working condition of 300°C, the high-melting-point Ti₂O₃ oxides (melting point of 2130°C) formed by controlling the smelting process can still stably exist in the steel, acting as nucleation cores for MC carbides and continuing to function. That is, part of the free carbon element present in the steel can still react with alloy elements in the steel using Ti₂O₃ oxides as nucleation cores to form fine MC carbides, thereby further fixing carbon element, preventing carbon element in the carbon steel from diffusing to the interface, and protecting the corrosion resistance of the rolled clad steel plate under long-term high-temperature service conditions.

The clad steel plate produced by the present invention has excellent corrosion resistance, and can be effectively applied in the energy and chemical industry as a manufacturing material for reaction vessels operating at room temperature to 300°C, which has very important practical significance and broad application prospects.

### Detailed Description

Below, the rolled clad steel plate for high-temperature equipment and its manufacturing method according to the present invention will be further explained and illustrated in conjunction with specific examples; however, such explanation and illustration shall not unduly limit the technical solution of the present invention.

The compositions of the substrate material and cladding layer of the rolled clad steel plates in the examples and comparative examples of the present invention are shown in Table 1, with the balance being Fe and other unavoidable impurities. The cladding material of the rolled clad steel plates in the examples and comparative examples is illustrated by austenitic stainless steel. The manufacturing process parameters of the examples of the present invention are shown in Table 2. Commercially available austenitic stainless steel can be used as the cladding slab.

The manufacturing method of the examples of the present invention comprises the following steps:
1) smelting and casting: smelting and continuous casting are carried out according to the chemical compositions shown in Table 1 to produce a cast slab; a 500 kg vacuum induction furnace is adopted as the smelting equipment; firstly, 410 kg of industrial pure iron is charged into the vacuum induction furnace, and a certain amount of CaO is added along with the charge according to the alloy composition ratio of the steel (the added CaO is used for slag formation during smelting); the furnace is evacuated, and smelting is performed at a minimum vacuum degree of approximately 25 Pa; argon gas is introduced for atmosphere protection during the smelting process; after the pure iron is completely melted, deoxidizers Si+Mn and Al are sequentially added for pre-deoxidation; the addition amount of deoxidizers is finely adjusted according to the online monitoring results of molten steel composition, and the free oxygen potential in the molten steel is controlled at 0.0020~0.0075%; then an appropriate amount of Ti is added for final deoxidation; alloys such as Nb are added for alloying treatment, and B is added lastly; ingots are cast by the top-pouring method;
2) Assembling slabs: the carbon steel cast slab for the substrate and the stainless steel cast slab for the cladding layer are surface treated; the roughness of surfaces of the two materials to be joined is ≤2.0Ra; after surface inspection, it is ensured that surfaces are free of surface defects such as oil stains, slag inclusions, and cracks; after welding the periphery of the clad slab, a vacuum is drawn to 8-60Pa;
3) rolling: the clad slab is heated at 1020~1200 °C, followed by two-stage rolling; the total accumulated reduction ratio of rolling is no less than 80%, and the finish rolling temperature is above 850 °C;
4) heat treatment: quenching and tempering are performed on the rolled clad steel plate; the clad rolled steel plate is subjected to quenching at a temperature of 920~955 °C with a quenching holding time of T1 = (1~1.2)H; upon completion of holding, the plate is discharged from the furnace and water-cooled to room temperature; tempering is then carried out at a temperature of 550~700 °C with a tempering holding time of T2 = (1~1.5)H; the plate is air-cooled after being discharged from the furnace; wherein the units of T1 and T2 are min, and H is the thickness of the substrate layer, with the unit being mm.

In the present invention, the chemical composition design and related processes of the cladding steel plates in Examples 1~7 all meet the design specification requirements of the present invention.

Correspondingly, the clad steel plates in Comparative Examples 1~5 are manufactured using the same process steps as those in Examples 1~7, with the differences being: the alloy element contents of the carbon steel in the substrate layers of Comparative Examples 1~4 exceed the design range; the element contents of Comparative Example 5 are within the design range, but in the smelting and casting operations of step 1) above, the addition sequence of deoxidizers and B alloy in Comparative Examples 1~5 is different; and the heat treatment tempering process is different.

Electrolytic samples were taken from the substrate layer materials and the stainless steel cladding side of the bonding interface of each clad steel plate in Examples 1~7 and each control clad steel plate in Comparative Examples 1~5. The MC precipitates in the stainless steel were extracted by electrolytic extraction method, and the precipitated phases of different size ranges were separated by filter membranes of different particle sizes; a laser particle size analyzer was used to detect the particle size distribution of the precipitated phases, and image analysis software was utilized to finally confirm the quantity and size distribution range of MC precipitates (wherein M represents one or more of Nb, Ti, Cr, and Mo) in the steel plates of each Example and Comparative Example. The data obtained from the observation and analysis are finally listed in Table 3 (substrate layer materials) and Table 4 (cladding materials at the bonding interface, i.e., the transition layer).

As can be seen from Table 3, the total number of precipitated phases in the substrate layer materials of the clad steel plates in Examples 1~7 ranges from 516 to 594, which is much higher than the 297 to 319 in the substrate layer materials of Comparative Examples 1~5. This indicates that after the implementation of the technical solution of the present invention, a greater number of MC carbide precipitated phases can be formed in the substrate layer material, thereby ensuring the effect designed in the technical solution of fixing free carbon in the carbon steel by means of stable carbides in the substrate layer. Moreover, the MC precipitates in the substrate layer materials of the clad steel plates in Examples 1~7 are small in size, mainly distributed in the range of 300~600 nm. The average major axis length of the MC precipitates is less than 600 nm, and the Bulk density of the MC precipitates is greater than 2.0×10⁴ /mm³. The number ratio of MC precipitates with a size of less than 600 nm to the total MC precipitates is more than 50%. When the size of the precipitated phases is small, it can to a certain extent pin the growth of austenite grains, thereby refining the grains and further improving the strength and toughness of the material. In contrast, the MC precipitates in the carbon steel of the substrate layers of the rolled clad steel plates in Comparative Examples 1~5 are large in size, with an average major axis length of greater than 800 nm, and the main precipitated phases are distributed in the range above 800 nm, with a high proportion of precipitated phases larger than 1000 nm. Their pinning effect on austenite grains is poor, which will lead to larger grain sizes and affect the strength and toughness of the steel plates. Due to the small number of stable precipitated phases formed in the carbon steel materials of the comparative examples, the amount of free carbon fixed by the precipitated phases in the carbon steel is reduced, resulting in a large amount of free carbon segregating to the bonding interface. Thus, a large number of grain boundary-precipitated carbides are generated in the cladding material at the bonding interface, reducing the corrosion resistance of the cladding material at the bonding interface.

As can be seen from Table 4, the number of detected MC precipitates in the cladding materials of the clad steel plates in Examples 1~7 is 182~244, which is much less than the 424~506 in the comparative examples, and the bulk density of MC precipitates in the cladding materials at the transition layer of the examples is less than 1×10⁴ /mm³. This indicates that a small amount of carbon in the carbon steel material of the substrate layer in Examples 1~7 diffuses to the cladding material through the bonding interface (transition layer), resulting in a small number of formed MC phases. In contrast, in Comparative Examples 1~5, a large amount of carbon element in the carbon steel material diffuse to the cladding material through the bonding interface, leading to a large number of carbides in the corresponding cladding materials. Meanwhile, it can also be seen from Table 4 that in the cladding materials at the bonding interface of Examples 1~7, the average major axis length of the MC precipitates is less than 700 nm, and the number ratio of MC precipitates with a size of less than 700 nm to the total MC precipitates is more than 50%; correspondingly, the average size of the MC precipitates detected in the comparative examples is greater than 850 nm. This further illustrates that the fixing effect of carbides on free carbon in the examples is far better than that in the comparative examples.

After analyzing the carbide precipitated phases of the clad steel plates in Examples 1~7 and the comparative steel plates in Comparative Examples 1~5, the mechanical properties and corrosion resistance of the steel plates in Examples 1~7 and Comparative Examples 1~5 were also evaluated. The evaluation results are shown in Table 5. As can be seen from Table 5, the yield strength and tensile strength of the carbon steel substrate layers in the comparative examples are lower than those in the examples. The main reason is that the smelting process, alloy addition sequence, heat treatment process, etc., of the carbon steel in the substrate layers of the comparative examples are different from those in the examples. As a result, the hardenability of the B element in the steel of the comparative examples cannot be fully exerted, and the precipitated phases in the steel are different, which have different effects on the microstructure of the steel plates. In the substrate layer of the clad steel plate according to the present invention, the surface microstructure is 60~80% of ferrite (F) + 20~40% of pearlite (P), and the central microstructure of the substrate layer is 30~40% of pearlite + 60~70% of ferrite. The small-sized precipitated phases in the examples further refine the austenite grains, which plays a certain role in improving the strength and toughness of the steel plates.

Samples of stainless steel at the bonding interface of the rolled clad steel plates from the examples and comparative examples were taken for intergranular corrosion testing in accordance with ASTM A262 Practice E. The test results are shown in Table 6. It can be seen from the results that the stainless steel at the bonding interface of the rolled clad steel plates prepared in accordance with the technical requirements of the present invention has good corrosion resistance. Therefore, in the clad steel plates of Examples 1~7, the corrosion resistance of the cladding stainless steel plate in each example is far superior to that of the comparative examples.

In summary, by means of optimized design and production process, the clad steel plate of the present invention controls the type of deoxidizer, deoxidation sequence, and addition amount of deoxidizer during steel smelting, performs alloying treatment in a certain sequence, and cooperates with specific production processes. This enables the formation of a large number of dispersively distributed nanoscale MC precipitates (wherein M represents one or both of Nb and Ti) in the steel. These nanoscale MC precipitates can fix the free carbon element in the carbon steel of the substrate material, thereby avoiding the massive diffusion of these carbon element to the bonding interface, which would cause the formation of a large number of carbide precipitated phases in the stainless steel and result in a decrease in the corrosion resistance of the stainless steel. Therefore, the technical solution of the present invention can ensure the strength and toughness of the carbon steel substrate material, while significantly improving the corrosion resistance of the rolled clad steel plate and guaranteeing its safety performance during long-term service at high temperatures.

In addition, it should be noted that the combination manner of the various technical features in the present invention is not limited to the combination manner recorded in the claims of the present invention or the combination manner described in the specific examples. All technical features recorded in the present invention can be freely combined or integrated in any manner, unless they contradict each other.

It should also be noted that the examples listed above are only specific embodiments of the present invention. Obviously, the present invention is not limited to the above examples, and similar changes or modifications made thereby can be directly derived by those skilled in the art from the disclosed content of the present invention or easily conceived, and all shall fall within the protection scope of the present invention.

**Table 1 (Unit: weight percent)**

| | Billet | C | Si | Mn | P | S | Als | Ti | B | O | N | Cu | Ni | Nb | Ca | Cr |
|---|---|---|---|---|---|---|---|---|---|---|---|---|---|---|---|---|
| Ex. 1 | Substrate | 0.081 | 0.26 | 0.56 | 0.015 | 0.003 | 0.012 | 0.009 | 0.0016 | 0.001 | 0.0049 | 0.02 | 0.17 | 0.049 | 0.0006 | - |
| | Cladding | 0.020 | 0.73 | 1.35 | 0.011 | 0.003 | - | - | - | 0.002 | 0.091 | - | 8.5 | - | - | 18.6 |
| Ex. 2 | Substrate | 0.055 | 0.31 | 1.68 | 0.014 | 0.006 | 0.015 | 0.010 | 0.0019 | 0.004 | 0.002 | 0.22 | - | 0.024 | 0.0012 | - |
| | Cladding | 0.020 | 0.73 | 1.35 | 0.011 | 0.003 | - | - | - | 0.002 | 0.091 | - | 8.5 | - | - | 18.6 |
| Ex. 3 | Substrate | 0.061 | 0.59 | 0.67 | 0.010 | 0.002 | 0.008 | 0.012 | 0.0025 | 0.005 | 0.003 | 0.15 | 0.03 | 0.039 | - | - |
| | Cladding | 0.020 | 0.73 | 1.35 | 0.011 | 0.003 | - | - | - | 0.002 | 0.091 | - | 8.5 | - | - | 18.6 |
| Ex. 4 | Substrate | 0.050 | 0.69 | 0.41 | 0.009 | 0.009 | 0.016 | 0.011 | 0.0046 | 0.003 | 0.0016 | 0.49 | 0.65 | 0.041 | 0.0054 | - |
| | Cladding | 0.020 | 0.73 | 1.35 | 0.011 | 0.003 | - | - | - | 0.002 | 0.091 | - | 8.5 | - | - | 18.6 |
| Ex. 5 | Substrate | 0.011 | 0.59 | 0.31 | 0.016 | 0.007 | 0.012 | 0.007 | 0.0035 | 0.002 | 0.002 | 0.53 | - | 0.028 | - | - |
| | Cladding | 0.020 | 0.73 | 1.35 | 0.011 | 0.003 | - | - | - | 0.002 | 0.091 | - | 8.5 | - | - | 18.6 |
| Ex. 6 | Substrate | 0.098 | 0.33 | 1.41 | 0.012 | 0.019 | 0.009 | 0.010 | 0.0030 | 0.002 | 0.003 | 0.08 | 0.37 | 0.009 | 0.0023 | - |
| | Cladding | 0.020 | 0.73 | 1.35 | 0.011 | 0.003 | - | - | - | 0.002 | 0.091 | - | 8.5 | - | - | 18.6 |
| Ex. 7 | Substrate | 0.068 | 0.65 | 1.02 | 0.015 | 0.007 | 0.017 | 0.008 | 0.0048 | 0.003 | 0.0041 | - | 0.45 | 0.040 | 0.0041 | - |
| | Cladding | 0.020 | 0.73 | 1.35 | 0.011 | 0.003 | - | - | - | 0.002 | 0.091 | - | 8.5 | - | - | 18.6 |
| Comp. Ex. 1 | Substrate | 0.165 | 0.42 | 0.52 | 0.018 | 0.025 | 0.028 | 0.001 | 0.0070 | 0.006 | 0.0052 | 0.64 | - | 0.052 | 0.010 | - |
| | Cladding | 0.020 | 0.73 | 1.35 | 0.011 | 0.003 | - | - | - | 0.002 | 0.091 | - | 8.5 | - | - | 18.6 |
| Comp. Ex. 2 | Substrate | 0.001 | 0.53 | 1.98 | 0.019 | 0.024 | 0.029 | 0.019 | 0.0065 | 0.007 | 0.0061 | - | 0.69 | 0.060 | 0.0053 | - |
| | Cladding | 0.020 | 0.73 | 1.35 | 0.011 | 0.003 | - | - | - | 0.002 | 0.091 | - | 8.5 | - | - | 18.6 |
| Comp. Ex. 3 | Substrate | 0.173 | 0.63 | 1.63 | 0.012 | 0.023 | 0.019 | 0.002 | 0.0057 | 0.0054 | 0.0059 | 0.77 | 0.68 | 0.068 | - | - |
| | Cladding | 0.020 | 0.73 | 1.35 | 0.011 | 0.003 | - | - | - | 0.002 | 0.091 | - | 8.5 | - | - | 18.6 |
| Comp. Ex. 4 | Substrate | 0.178 | 0.75 | 1.77 | 0.014 | 0.004 | 0.010 | 0.001 | 0.0066 | 0.0072 | 0.0067 | 0.86 | 0.77 | 0.077 | - | - |
| | Cladding | 0.020 | 0.73 | 1.35 | 0.011 | 0.003 | - | - | - | 0.002 | 0.091 | - | 8.5 | - | - | 18.6 |
| Comp. Ex. 5 | Substrate | 0.083 | 0.68 | 1.60 | 0.015 | 0.003 | 0.009 | 0.012 | 0.0037 | 0.003 | 0.0026 | 0.18 | 0.16 | 0.039 | 0.0031 | - |
| | Cladding | 0.020 | 0.73 | 1.35 | 0.011 | 0.003 | - | - | - | 0.002 | 0.091 | - | 8.5 | - | - | 18.6 |

**Table 2**

| | Substrate thickness (mm) | Cladding thickness (mm) | Transition layer thickness (µm) | Oxygen level in molten steel after Al deoxidation (%) | Slab surface roughness Ra | Clad slab vacuum Pa | Heating temperature (°C) | Finish rolling temperature (°C) | 1^{st} stage reduction (%) | 2^{nd} stage reduction (%) | Final rolling reduction (%) | Total accumulated reduction (%) | Quenching temperature (°C) | Quenching holding time (min) | Tempering temperature (°C) | Tempering holding time (min) |
|---|---|---|---|---|---|---|---|---|---|---|---|---|---|---|---|---|
| Ex. 1 | 10 | 2 | 1 | 0.0021 | 1.6 | 20 | 1120 | 945 | 60 | 21 | 10 | 81 | 936 | 12 | 695 | 12 |
| Ex. 2 | 30 | 3 | 2 | 0.0039 | 1.5 | 9 | 1180 | 950 | 70 | 22 | 13 | 92 | 941 | 30 | 700 | 39 |
| Ex. 3 | 115 | 11 | 23 | 0.0073 | 1.3 | 35 | 1165 | 960 | 67 | 30 | 18 | 97 | 950 | 15 | 620 | 21 |
| Ex. 4 | 80 | 8 | 12 | 0.0055 | 1.0 | 46 | 1200 | 953 | 62 | 26 | 9 | 88 | 955 | 81 | 611 | 81 |
| Ex. 5 | 150 | 14 | 33 | 0.007 | 1.7 | 59 | 1150 | 930 | 61 | 24 | 15 | 85 | 930 | 55 | 560 | 71 |
| Ex. 6 | 50 | 4 | 10 | 0.0065 | 1.8 | 25 | 1090 | 855 | 61 | 21 | 11 | 82 | 943 | 76 | 595 | 101 |
| Ex. 7 | 199 | 18 | 40 | 0.0045 | 1.9 | 22 | 1025 | 935 | 73 | 23 | 14 | 96 | 950 | 110 | 652 | 150 |
| Comp. Ex. 1 | ***10*** | ***2*** | ***6*** | ***0.0131*** | 2.9 | 70 | 1210 | 930 | 75 | 15 | 5 | 90 | 930 | 12 | 780 | 122 |
| Comp. Ex. 2 | ***65*** | ***6*** | ***14*** | ***0.0119*** | 3.1 | 93 | 1180 | 945 | 55 | 27 | 2 | 82 | 950 | 70 | 590 | 97 |
| Comp. Ex. 3 | ***100*** | ***9*** | ***19*** | ***0.0107*** | 3.2 | 88 | 1128 | 950 | 60 | 13 | 3 | 73 | 940 | 100 | 760 | 124 |
| Comp. Ex. 4 | ***195*** | ***18*** | ***91*** | ***0.0108*** | 3.5 | 96 | 1180 | 948 | 42 | 40 | 6 | 82 | 945 | 80 | 587 | 87 |
| Comp. Ex. 5 | ***125*** | ***13*** | ***38*** | ***0.0117*** | 4.0 | 89 | 1160 | 950 | 55 | 20 | 1 | 75 | 950 | 105 | 750 | 112 |

**Table 3**

| | 0-100 nm | 100-200 nm | 200-300 nm | 300-400 nm | 400-500 nm | 500-600 nm | 600-700 nm | 700-800 nm | 800-900 nm | 900-1000 nm | >1000 nm | Total Number | Average Size | Bulk density |
|---|---|---|---|---|---|---|---|---|---|---|---|---|---|---|
| | (number) | (number) | (number) | (number) | (number) | (number) | (number) | (number) | (number) | (number) | (number) | (number) | (nm) | (10⁴ /mm³) |
| Ex. 1 | 5 | 13 | 42 | 128 | 116 | 80 | 65 | 34 | 16 | 38 | 20 | 557 | 525 | 2.3 |
| Ex. 2 | 9 | 21 | 42 | 122 | 153 | 81 | 50 | 27 | 39 | 15 | 23 | 582 | 556 | 3.0 |
| Ex. 3 | 6 | 16 | 27 | 137 | 152 | 72 | 61 | 50 | 38 | 17 | 18 | 594 | 545 | 2.4 |
| Ex. 4 | 5 | 18 | 19 | 112 | 114 | 138 | 52 | 0 | 31 | 13 | 14 | 516 | 568 | 2.5 |
| Ex. 5 | 7 | 12 | 20 | 123 | 112 | 79 | 60 | 13 | 50 | 72 | 18 | 566 | 589 | 2.8 |
| Ex. 6 | 9 | 11 | 27 | 111 | 121 | 74 | 62 | 10 | 52 | 59 | 9 | 545 | 593 | 2.1 |
| Ex. 7 | 5 | 14 | 18 | 79 | 177 | 62 | 71 | 53 | 20 | 17 | 17 | 533 | 562 | 2.0 |
| Comp. Ex. 1 | 0 | 0 | 1 | 3 | 10 | 25 | 28 | 30 | 51 | 51 | 98 | 297 | 864 | 1.1 |
| Comp. Ex. 2 | 0 | 0 | 0 | 5 | 15 | 23 | 29 | 41 | 52 | 54 | 92 | 311 | 851 | 1.0 |
| Comp. Ex. 3 | 0 | 0 | 1 | 1 | 9 | 22 | 32 | 50 | 42 | 46 | 95 | 298 | 859 | 1.1 |
| Comp. Ex. 4 | 0 | 0 | 2 | 1 | 12 | 40 | 31 | 47 | 51 | 46 | 89 | 319 | 838 | 1.0 |
| Comp. Ex. 5 | 0 | 0 | 1 | 2 | 11 | 27 | 30 | 52 | 62 | 36 | 97 | 318 | 849 | 1.2 |

**Table 4**

| | 0-100 nm | 100-200 nm | 200-300 nm | 300-400 nm | 400-500 nm | 500-600 nm | 600-700 nm | 700-800 nm | 800-900 nm | 900-1000 nm | >1000 nm | Total Number | Average Size | Bulk density |
|---|---|---|---|---|---|---|---|---|---|---|---|---|---|---|
| | (number) | (number) | (number) | (number) | (number) | (number) | (number) | (number) | (number) | (number) | (number) | (number) | (nm) | (10⁴ /mm³) |
| Ex. 1 | 0 | 7 | 17 | 12 | 11 | 32 | 55 | 26 | 35 | 18 | 2 | 215 | 661 | 0.8 |
| Ex. 2 | 1 | 6 | 19 | 11 | 15 | 33 | 69 | 38 | 32 | 17 | 3 | 244 | 656 | 0.9 |
| Ex. 3 | 0 | 5 | 18 | 9 | 15 | 31 | 45 | 41 | 39 | 10 | 5 | 218 | 670 | 0.7 |
| Ex. 4 | 1 | 5 | 16 | 8 | 11 | 28 | 51 | 28 | 49 | 15 | 4 | 216 | 686 | 0.6 |
| Ex. 5 | 0 | 3 | 19 | 15 | 18 | 32 | 40 | 29 | 30 | 18 | 1 | 205 | 651 | 0.8 |
| Ex. 6 | 1 | 5 | 15 | 9 | 17 | 27 | 30 | 33 | 38 | 9 | 3 | 187 | 662 | 0.6 |
| Ex. 7 | 0 | 2 | 10 | 8 | 16 | 35 | 21 | 37 | 42 | 10 | 1 | 182 | 690 | 0.5 |
| Comp. Ex. 1 | 2 | 9 | 8 | 13 | 22 | 12 | 28 | 35 | 56 | 171 | 140 | 496 | 859 | 1.9 |
| Comp. Ex. 2 | 6 | 6 | 0 | 10 | 15 | 31 | 39 | 29 | 87 | 121 | 162 | 506 | 858 | 1.7 |
| Comp. Ex. 3 | 8 | 1 | 1 | 11 | 12 | 41 | 40 | 22 | 81 | 131 | 145 | 493 | 853 | 1.8 |
| Comp. Ex. 4 | 0 | 0 | 2 | 1 | 10 | 42 | 21 | 53 | 66 | 98 | 115 | 408 | 862 | 1.5 |
| Comp. Ex. 5 | 1 | 1 | 1 | 2 | 13 | 40 | 28 | 55 | 62 | 96 | 125 | 424 | 857 | 1.6 |

**Table 5**

| | Substrate yield strength (MPa) | Substrate tensile strength (MPa) | Substrate percentage reduction of area (%) | Substrate elongation (%) | Substrate impact absorption energy at -20°C (J) | Substrate impact absorption energy at -40°C (J) | Steel plate shear strength (MPa) | Substrate grain size (Grade) | Microstructure composition (%) | |
|---|---|---|---|---|---|---|---|---|---|---|
| | | | | | | | | | Surface (F+P) | Core (P+F) |
| Ex. 1 | 321 | 436 | 77 | 26 | 202 | 126 | 351 | 7 | 71+29 | 39+61 |
| Ex. 2 | 390 | 497 | 76 | 27 | 233 | 123 | 326 | 7.5 | 62+38 | 33+67 |
| Ex. 3 | 311 | 417 | 75 | 25 | 251 | 132 | 316 | 6 | 62+38 | 35+65 |
| Ex. 4 | 298 | 409 | 78 | 25 | 243 | 141 | 311 | 6.5 | 77+23 | 32+68 |
| Ex. 5 | 301 | 415 | 71 | 27 | 243 | 120 | 324 | 7 | 60+40 | 34+66 |
| Ex. 6 | 291 | 397 | 79 | 24 | 239 | 130 | 289 | 6.5 | 73+27 | 35+65 |
| Ex. 7 | 289 | 419 | 76 | 25 | 240 | 138 | 315 | 6 | 68+32 | 31+69 |
| Comp. Ex. 1 | 231 | 327 | 78 | 23 | 105 | 100 | 281 | 4.5 | 40+60 | 25+75 |
| Comp. Ex. 2 | 220 | 336 | 76 | 24 | 102 | 99 | 278 | 5 | 35+65 | 22+78 |
| Comp. Ex. 3 | 237 | 371 | 77 | 24 | 101 | 95 | 291 | 4.5 | 32+68 | 21+79 |
| Comp. Ex. 4 | 220 | 335 | 75 | 24 | 100 | 99 | 278 | 4.5 | 36+64 | 23+77 |
| Comp. Ex. 5 | 237 | 372 | 78 | 24 | 108 | 95 | 291 | 5 | 33+67 | 20+80 |

**Table 6**

| | Cracking | Qualified |
|---|---|---|
| Ex. 1 | N | Y |
| Ex. 2 | N | Y |
| Ex. 3 | N | Y |
| Ex. 4 | N | Y |
| Ex. 5 | N | Y |
| Ex. 6 | N | Y |
| Ex. 7 | N | Y |
| Comp. Ex. 1 | Y | N |
| Comp. Ex. 2 | Y | N |
| Comp. Ex. 3 | Y | N |
| Comp. Ex. 4 | Y | N |
| Comp. Ex. 5 | Y | N |

## Claims

1. A corrosion-resistant rolled clad steel plate made by roll cladding of a carbon steel as a substrate material and a stainless steel as a cladding layer, and the clad steel plate comprises a substrate layer, a cladding layer, and a transition layer between the substrate layer and the cladding layer,
wherein the substrate layer has the following composition by weight percentage: C: 0.01%~0.10%, Si: 0.20%~0.70%, Mn: 0.30%~1.70%, Ti: 0.006%~0.012%, Als: 0.008%~0.018%, Nb: 0.0090%~0.050%, B: 0.0010%~0.0050%, N: 0.0015%~0.0050%, P ≤ 0.017%, S ≤ 0.020%, O ≤ 0.0050%, with a balance comprising Fe and other unavoidable impurities;
wherein a surface microstructure of the substrate layer is 60~80% of ferrite + 20~40% of pearlite + MC precipitates in terms of area percentage; and a central microstructure of the substrate layer is 30~40% of pearlite + 60~70% of ferrite + MC precipitates in terms of area percentage; wherein M represents one or both of Nb and Ti, an average major axis length of the MC precipitates is less than 600 nm, and a bulk density of MC precipitates with a major axis length of less than 600 nm is greater than or equal to 2.0×10⁴ /mm³;
wherein a microstructure of the cladding layer contains MC precipitates, wherein M represents one or more of Cr, Mo, Nb, and Ti, an average major axis length of the MC precipitates is less than 700 nm, and a bulk density of the MC precipitates is less than 1.0×10⁴ /mm³.

2. The corrosion-resistant rolled clad steel plate according to claim 1, wherein the composition of the substrate material of the clad steel plate further comprises at least one of the following chemical elements: 0 < Ca ≤ 0.0055%, 0< Ni ≤ 0.65%, and 0< Cu ≤ 0.55%.

3. The corrosion-resistant rolled clad steel plate according to claim 1 or 2, wherein in the composition of the substrate material of the clad steel plate, the balance is Fe and other unavoidable impurities.

4. The corrosion-resistant rolled clad steel plate according to claim 1, 2, or 3, wherein in the substrate layer of the clad steel plate, a number ratio of MC precipitates with a major axis length of less than 600 nm to a total MC precipitates is greater than 50%.

5. The corrosion-resistant rolled clad steel plate according to claim 1, 2, 3, or 4, wherein the stainless steel is selected from austenitic stainless steel, ferritic stainless steel, duplex stainless steel, and super stainless steel.

6. The corrosion-resistant rolled clad steel plate according to any one of claims 1~4, wherein the stainless steel has the following composition by weight percentage: C: 0.01~0.05%; Si: 0.50~0.80%; Mn: 1.10~1.50%; Ni: 6.5~9.5%; Cr: 15.0~22.0%; N: 0.060~0.120%; P: ≤ 0.015%; S: ≤ 0.005%; O: ≤ 0.005%; with the balance being Fe and other unavoidable impurities.

7. The corrosion-resistant rolled clad steel plate according to any one of claims 1~6, wherein in the cladding layer, a number ratio of MC precipitates with a major axis length of less than 700 nm to a total MC precipitates is greater than 50%.

8. The corrosion-resistant rolled clad steel plate according to any one of claims 1~7, wherein a σ phase with an area ratio of ≤ 1.5% is further present in the microstructure of the cladding layer of the clad steel plate; preferably, the area ratio of the σ phase adjacent to the transition layer is ≤ 0.5%.

9. The corrosion-resistant rolled clad steel plate according to any one of claims 1~8, wherein a thickness of the substrate material of the clad steel plate is ≥ 6 mm, and a thickness of the cladding layer is ≥ 2 mm; preferably, the thickness of the transition layer is ≤ 230 µm; preferably, the thickness of the substrate layer is 6~200 mm, 10~200 mm, or 10~100 mm; preferably, the thickness of the cladding layer is 2~20 mm; preferably, the thickness of the transition layer is 1~230 µm, 1~150 µm, or 1~50 µm.

10. The corrosion-resistant rolled clad steel plate according to any one of claims 1~9, wherein the substrate layer has a yield strength of ≥ 255 MPa, a tensile strength of ≥ 390 MPa, a percentage reduction of area of ≥ 60%, an elongation of ≥ 20%, an impact absorption energy at -20°C of ≥ 200 J, and an impact absorption energy at -40°C of ≥ 120 J; a grain size grade of the substrate material is not less than grade 6.0; and the clad steel plate has a shear strength of ≥ 280 MPa.

11. The corrosion-resistant rolled clad steel plate according to claim 10, wherein:
the substrate layer of the clad steel plate has a yield strength of ≥ 280 MPa, or ≥ 300 MPa, or in the range of 255~400 MPa or 280~400 MPa;
the substrate layer of the clad steel plate has a tensile strength of ≥ 410 MPa, or ≥ 430 MPa, or in the range of 390~500 MPa or 410~500 MPa;
the substrate layer of the clad steel plate has a percentage reduction of area of ≥ 70%, or in the range of 60~80% or 70~80%;
the substrate layer of the clad steel plate has an elongation of ≥ 23%, or in the range of 20~27% or 23~27%;
the substrate layer of the clad steel plate has an impact absorption energy at -20°C of ≥ 230 J, or in the range of 200~260 J or 230~260 J;
the substrate layer of the clad steel plate has an impact absorption energy at -40°C of 120~150 J; a shear strength at a clad interface of the substrate layer of the clad steel plate is ≥ 300 MPa, or in the range of 280~360 MPa.

12. A method for manufacturing the corrosion-resistant rolled clad steel plate according to any one of claims 1~11, comprising the following steps:
1) smelting and casting to prepare a substrate material slab
a substrate material slab is smelted and cast according to the composition recited in claim 1, 2 or 3; during the smelting process, Mn+Si and Al are sequentially added first for pre-deoxidation, an oxygen potential of a molten steel after pre-deoxidation is controlled at 0.0020%~0.0075%, and Ti is then added for final deoxidation; upon completion of deoxidation, element B is added, and the substrate material slab is obtained after casting;
stainless steel is prepared or provided as a cladding slab;
2) Assembling slabs
the substrate material slab and the cladding slab are subjected to surface treatment and then stacked together; peripheries of stacked slabs are welded and sealed, evacuated to vacuum, and sealed again to form a clad slab; preferably, a vacuum degree after evacuation is 8~60 Pa;
3) rolling the clad slab
the clad slab is heated to 1020~1200°C, and then subjected to two-stage rolling; a total reduction ratio of the clad slab in a first-stage rolling is not less than 60%, a total reduction ratio in a second-stage rolling is not less than 20%, a reduction ratio of final rolling is 8~18%, a total reduction ratio of the two-stage rolling is not less than 80%, and a finish rolling temperature is 850°C or more;
4) heat treatment: a clad steel plate is subjected to quenching and tempering treatment.

13. The method for manufacturing the corrosion-resistant rolled clad steel plate according to claim 12, wherein in step 2), surfaces of the cast slabs for the substrate and the cladding layer are processed to ensure that the surfaces of the cast slabs are free of obvious surface defects including oil stains, slag inclusions, and cracks, while ensuring that a roughness of the processed surfaces of the cast slabs is not greater than 2.0Ra.

14. The method for manufacturing the corrosion-resistant rolled clad steel plate according to claim 12, wherein in step 4), a quenching temperature is 920~955°C, a quenching holding time T1=(1~1.2)H, and after the holding is completed, the clad steel plate is taken out of furnace and cooled to room temperature with water, wherein a unit of T1 is min, and H is a thickness of the substrate layer, with a unit being mm.

15. The method for manufacturing the corrosion-resistant rolled clad steel plate according to any one of claims 12~14, wherein in step 4), a tempering temperature is 550~700°C, a tempering holding time T2=(1~1.5)H, wherein a unit of T2 is min, and H is a thickness of the substrate layer, with a unit being mm.
